# EUROPEAN PATENT APPLICATION

(11) **EP 1 612 712 A1**
(43) Date of publication of application: **04.01.2006**
(21) Application number: 04254024.5
(22) Date of filing: 03.07.2004
(51) Int. Cl.: G06K 9/00

(54) **Biometric identification system**

(71) Applicant: Senselect Limited, Worcester WR2 6DS (GB)
(72) Inventor: Topping, Catherine, Worcester WR2 6DS (GB)
(74) Representative: Bailey, Richard Alan

(57) **Abstract**

An identification method comprising entering first and second pieces of biometric information, comparing data representative of the first piece of biometric information with stored data held in a first data store, comparing data representative of the second piece of biometric information with stored data held in a second data store, and operating a device using the results of the two comparisons.

## Description

This invention relates to an identification system. In particular, the invention relates to a multiple stage biometric identification system.

Fingerprints have been used to identify individuals for many years. With the advent of automated techniques for reading fingerprints and comparing an individuals fingerprints with a database of known finger prints, the use of fingerprints as an identification tool is set to become increasingly common. Although fingerprints are widely recognised as being a good identification tool, there are a number of other biometric characteristics, which can be used to identify an individual, for example iris, voice or DNA pattern recognition techniques are known.

There is widespread concern about the ability of thieves to use information relating to the identity of an individual to gain, for example, unauthorised access to an individual's bank account or credit card account. Identity theft is also an increasing concern to governments and organisations where illegal use of another person's identity for criminal or illegal access purposes is a concern. The use of a biometric identification system in order to prevent such unauthorised access has been considered, for example by storing fingerprint information on a token, for example in the form of a smart card, or a biometric document like a passport or electronic file like an email or text message, with an embedded biometric like a fingerprint template which is read by a biometric reader, the individual's fingerprint being compared with the stored information held on the token, card or passport or file prior to processing a transaction or gaining entry to a building or secure facility like a border crossing or an airport or a file. This approach has the risk that it may be possible to clone the smart card or passport or file and reprogram the fingerprint information held on the card or passport or document thereby allowing an unauthorised user to process transactions or gain unauthorised access.

Another concern has been the privacy of the individual's biometric data as an individual's biometric characteristic cannot be changed, like a password or PIN number can be changed. Where a government issues a Citizen ID Card containing the citizen's biometric data and this biometric data is also being used for identification for banking or computer or secure sites like offices and airports, the concern is that a hacker could steal the biometric data from the Citizen ID Card and use it to help gain unauthorised access to the citizen's bank account, computer or secure site. Freedom of Rights issues are also involved in the above scenario.

One aspect of this invention is intended to provide an identification system having an improved level of security, and which also allows for novel switching capabilities, for example between user roles, modes of operation or computer applications. In this regard, a user role could be a users membership of a group (for example accounts, sales, administration, project 1 group, project 2 group, etc, or a user's different roles within an organisation such as a systems administrator and an actual end user). A mode of operation could be an electronic switch which can be opened or closed, or a building or facility access security system with low, medium, high and red alert entry modes. Computer applications could be, for example, word processing programs, spreadsheets and the like, the system allowing a novel way of switching between these applications, or between personal, company and company confidential documents or data.

According to the present invention there is provided an identification method comprising entering first and second pieces of biometric information, comparing data representative of the first piece of biometric information with stored data held in a first data store, comparing data representative of the second piece of biometric information with stored data held in a second data store, and operating a device using the results of the two comparisons. Although the invention envisages two data stores it is not limited to two. However for the sake of simplicity of explanation only two data stores are included in the examples. One data store, is conveniently a portable data store like a token, for example in the form of a programmed smart card, or like a biometric document, for example a passport with an embedded fingerprint template or an electronic file for example like an email or text message or spreadsheet or music file a printed file for example like a book or legal document. The second data store may take, for example, the form of a database held by a computer. The two data stores could also be a combination where one data store is a token and the other data store is a biometric document or electronic or printed file.

The first and second pieces of biometric information may take, for example, the form of fingerprints. However, it will be appreciated that other pieces of biometric information may be utilised. For example, the biometric information may relate to an iris, voice or DNA pattern.

The two pieces of biometric information could be entered simultaneously or sequentially. Where the biometric information is entered sequentially, an additional level of security can be introduced as the user may be required to know the sequence in which the information must be entered. The two pieces of biometric information may comprise, for example, two parts of a single fingerprint, iris pattern or the like In this case neither data store holds a complete biometric template and no biometric data transmitted between the biometric reader and the data stores is a complete biometric template. An unauthorised user will therefore not be able to discern the user's identity from the biometric data held on the data stores or the biometric data transmitted between the biometric reader and the data stores.

It will be appreciated that by using the method of the invention, an identification system can be provided which makes use of biometric characteristics and which overcomes the risk of smart cards or the like or biometric documents like passports or electronic or printed files from being cloned or re-programmed. The invention also provides benefits by ensuring that no one data store ever stores a complete record of an individuals biometric characteristic and therefore reduces the privacy concerns associated with records like citizens ID cards.

One embodiment of the invention will now be described, by way of example only.

The following example relates to the use of the method of the invention in controlling the operation of an automated teller machine (ATM) or similar machine by an individual to determine whether or not the individual is authorised to access bank account information or process transactions, for example the withdrawal of money from the ATM.

In accordance with the method of the invention, a user of an ATM is issued with a smart card, that is to say a computer readable card carrying information relating to the individual's bank account, for example encoded information setting out the account number for the account. In addition, the card carries a storage device in the form of a chip capable of storing a relatively large amount of data. The storage device is programmed with user account data including biometric information representative of a characteristic of the individual, for example with fingerprint information relating to the fingerprint of the first finger of the individual's right hand.

A second piece of biometric information is stored upon, for example, a central computer database to which the ATM is connected. By way of example, the central computer database may be programmed with data representative of the fingerprint pattern of the user's second finger of his right hand.

In use, prior to being able to use the ATM to withdraw cash or perform another transaction, the user inserts his card into a card reader associated with the ATM. He then places, in sequence, the first and second fingers of his right hand on to a fingerprint pattern reader or scanner associated with the ATM. Fingerprint data representative of the two input fingerprint patterns are then compared with the stored fingerprint information held on the smart card and on the central computer database. A number of techniques are known for use in the automated comparison of input fingerprint information with stored fingerprint data. Any of these techniques may be used, and so no description of how the comparison operation is performed is given here. The results of the two comparison operations can be used to determine firstly whether or not the user is the authorised user of the card, and also whether the user is authorised to perform transactions on the account to which the card relates.

The identification technique described hereinbefore has a number of advantages. Firstly, as it is comparing input data with stored data held in different locations the system is of improved security. There is also the advantage that only some of an individual's fingerprint information is permanently stored on the banks central database, rather than a full set of fingerprint information, thus the system may be viewed more favourably with those concerned about an individual's privacy than may otherwise by the case.

Other benefits of the system are that it could be used to enable a user to signal that he is being forced to operate the system under duress. By way of example, if a user places an incorrect finger on to the fingerprint reader, the result of the comparison operation may correctly identify the user, but the failure of the user to use his correct finger may be taken as an indication that he is being forced to use the system under duress. By way of example, the operator may place his finger, the fingerprint data of which is stored on the smart card on to the fingerprint reader at a time when he should have placed one of his fingers, the fingerprint data is held on the computer system, on to the fingerprint reader. Under such circumstances, the system may operate an alarm, and give the user limited use or no use of the system.

A further benefit of the system is that it may be easier to use by those who may struggle to use a conventional keypad, for example the visually impaired or those simply unused to using a keypad, as the system is less reliant upon the use of a keypad. As well as being easier to use, the security benefits outlined above will apply by virtue of the data being held in different locations.

There are a number of ways in which the simple method described hereinbefore may be enhanced. By way of example, if an increased number of fingerprints or other biometric characteristics are stored in either location, additional checks may be performed. The additional checks could include requiring the fingerprints to be read in a predetermined order known to the user, for example as described in British Patent No. 2342749, but bearing in mind that some of the fingerprint information is stored in the first store and some is stored in the second store. Alternatively, the ATM could be programmed in such a manner as to request the user to place one or more of his fingers on to the reader, the selection of which finger(s) to use being determined, for example, by a random number generator built into the program.

Another possibility is that the first and second pieces of biometric information may be parts of a single biometric characteristic. By way of example, an input fingerprint or iris pattern may be divided into two or more parts, one of which is compared with data representative of part of a biometric characteristic held on, for example, a smart card or biometric document or electronic file and another part of the input biometric being compared with data representative of part of a biometric characteristic stored, for example, on a computer system. It will be appreciated that, using this technique, no single data store contains data representative of even one complete biometric characteristic and no complete biometric characteristic is transmitted between the biometric reader and the data stores.

If this technique is used, then it will be appreciated that the comparison operation may require modification to allow for, for example, fingerprints being entered at different angles or with different pressure or with different time periods with which the finger is maintained in contact with the reader. In this way additional randomness is built into the security system which makes it more difficult for an unauthorised user to know how to present a duplicated fingerprint to the reader. Only the authorised user will know the sequence, angle of use, pressure or time to maintain the finger on the reader. The system will be programmed to identify an appropriate position at which to divide the input biometric characteristic into the two or more parts.

British Patent No. 2342749 discloses that, by allocating a number to each of a user's fingers, multi-digit numbers can be input without using a conventional keypad. Although the digits can be allocated to each of a user's fingers in sequence as disclosed in GB 2342749, this need not be the case. As a result, multi-digit numbers can be input with increased privacy and security as a passer-by would not be able to ascertain the input number without knowing the relationship between the user's fingers or with the angle of use, pressure or time the finger is maintained on the reader and the numbers represented thereby. Further, by storing fingerprint data in two locations, neither containing a full set of the data, an unauthorised user would not be able to input the full range of numbers even if he had previously accessed one of the data stores to modify the data stored therein and ascertain the above-mentioned relationship.

Although the description hereinbefore relates primarily to the operation of an ATM using fingerprint information to determine whether or not a user is the authorised user, the invention may be used in a wide range of other applications and equipment, and other biometric characteristics may be used instead of or in conjunction with fingerprint information. Further, although two specific examples of locations in which fingerprint data can be stored are given, the data may be stored in other locations.

Although in the description hereinbefore, a number of fingerprints are input in a pre-determined sequence in order to gain control of a device, this need not be the case. Instead, control of a device may be achieved by inputting a single fingerprint, the device being controlled in accordance with which of the individuals fingerprints are input. By way of example, instead of typing a password to log onto a computer system with different modes of operation, say local computer, local area network and internet access, the identification system may be used. The system may be set up so that inputting of one fingerprint permits use of a local computer. Subsequent input of another fingerprint may allow use of a local area network and subsequent input of another fingerprint may permit internet access. In all three cases, the identity of the individual is determined and access denied if the individual is not recognised or not permitted the particular level of access. The system benefits by not requiring the user to remember and enter multiple passwords for each entry level and provides the user with the ability to effortlessly and securely switch between the entry levels without recourse to logon screens and passwords. It will be appreciated that such a technique is, in effect, a secure control technique, the operation performed being dependent upon both the identity of the individual and which finger or fingers have been used.

One alternative application of the invention is in systems requiring input from two or more users, for example systems in which an operator enters information or requests a task to be undertaken, the operators entry or request subsequently being authorised or validated before being entered or completed. In such applications, the operator may have one biometric characteristic read and compared with a data stored in one location, for example on a smart card or a biometric document. He then enters information for verification by a second user, and this information is sent together with data representative of a second biometric characteristic to the second user. The second user likewise enters one biometric characteristic, which is compared, for example, with data stored on a smart card. Provided this comparison is accepted, he can then validate the request by entering a second fingerprint or other biometric characteristic, which is sent with the original request and the already attached biometric data to be actioned. Prior to being actioned, both of the attached biometric data are compared with centrally held data. This technique allows an electronic "signature" to be attached to a request in a secure manner, and may be suitable for use by, for example, financial institutions or, with appropriate modification, for controlling access to buildings, secure sites like border crossings and airports and to a wide area network or computer system allowing remote access thereto. Although this example uses two users - the requestor and the validator; the spirit of the invention does not limit this to two users and more than one user or a group of users could be involved in creating and requesting approval and more than one user likewise involved in actioning the request.

## Claims

1. An identification method comprising entering first and second pieces of biometric information, comparing data representative of the first piece of biometric information with stored data held in a first data store, comparing data representative of the second piece of biometric information with stored data held in a second data store, and operating a device using the results of the two comparisons.

2. A method according to Claim 1, wherein one of the first and second data stores comprises a portable data store.

3. A method according to Claim 1 or Claim 2, wherein the first and second pieces of biometric information are entered simultaneously.

4. A method according to any of the preceding claims, wherein the data representative of the first and second pieces of biometric information are never transmitted together.

5. A method according to Claim 1, wherein the first and second pieces of biometric information form parts of a single biometric characteristic.

6. A method according to Claim 5, wherein the single biometric characteristic comprises one of a fingerprint pattern and an iris pattern.

7. A method according to Claim 5, wherein the single biometric characteristic comprises one of a face pattern, an iris pattern or another biometric characteristic.

8. A method according to Claim 1 or Claim 2, wherein the first and second pieces of biometric information are entered sequentially.

9. A method according to Claim 8, wherein at least one additional check is performed.

10. A method according to Claim 9, wherein the additional check includes checking the order of data entry against a predetermined order.

11. A method according to Claim 10, wherein the predetermined order is selected from a range of predetermined orders.

12. A method according to Claim 1, wherein the step of operating the device includes switching a user role, mode of operation or computer application.
